# EUROPEAN PATENT APPLICATION

(11) **EP 4 513 950 A1**
(43) Date of publication of application: **26.02.2025**
(21) Application number: 22937995.3
(22) Date of filing: 22.04.2022
(51) Int. Cl.: H04W 24/10

(54) **REPORTING METHOD AND APPARATUS FOR SUCCESSFUL PSCELL ADDITION OR REPLACEMENT REPORT**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/088636
(87) International publication number: WO 2023/201759

(57) **Abstract**

The present disclosure belongs to the technical field of communications, and provides a reporting method and apparatus for a successful PScell addition or replacement report, a device and a storage medium. The method comprises: after a reporting trigger condition is met, sending indication information to a network device, wherein the indication information can be used for indicating that a terminal device has a successful PScell addition or replacement report. Thus, the present disclosure provides a processing method for the situation that "a successful report for recording PScell addition or change is not supported temporarily", to provide an additional confirmation opportunity to improve the success rate of PScell addition or change.

## Description

### FIELD

The present disclosure relates to the field of communication technologies, and more particularly to a method, apparatus, and device for reporting a successful primary secondary cell (PScell) addition or change report, and a storage medium.

### BACKGROUND

In a communication system, a network-side device may configure a trigger condition of PScell addition or change for a terminal device, and the terminal device may perform the PScell addition or change when the condition is met.

However, after a PScell is changed or added, a report recording that the PScell is successfully added or changed is not supported for now. If a failure of the PScell addition or change happens, it may affect a subsequent transmission service, such as results in a dropped call. Therefore, there is an urgent need to provide a method for "reporting a successful PScell addition or change report" to provide an additional confirmation opportunity and ensure the success of the PScell addition or change.

### SUMMARY

The present disclosure provides a method, apparatus, and device for reporting a successful PScell addition or change report and a storage medium to provide an additional confirmation opportunity and improve a success rate of the PScell addition or change.

In an aspect, an embodiment of the present disclosure provides a method for reporting a successful PScell addition or change report, which is performed by a terminal device, and includes: sending indication information to a network-side device after a reporting trigger condition is met. The indication information is used to indicate that the terminal device has the successful PScell addition or change report.

Optionally, in an embodiment of the present disclosure, the reporting trigger condition is that the terminal device records relevant information of PScell addition or change into the successful PScell addition or change report.

Optionally, in an embodiment of the present disclosure, sending the indication information to the network-side device includes: sending the indication information via a UEAssistanceInformation message.

Optionally, in an embodiment of the present disclosure, sending the indication information to the network-side device includes: sending the indication information via a media access control control element (MAC CE) message.

Optionally, in an embodiment of the present disclosure, a priority of the MAC CE message is lower than a priority of a buffer status report (BSR) MAC CE message.

Optionally, in an embodiment of the present disclosure, sending the indication information to the network-side device includes: sending the indication information via a measurement report.

Optionally, in an embodiment of the present disclosure, after sending the indication information to the network-side device, the method further includes: starting a prohibition timer. The terminal device no longer sends the indication information after the prohibition timer reaches a preset threshold.

Optionally, in an embodiment of the present disclosure, the reporting trigger condition is that the terminal device accesses a network, and the successful PScell addition or change report includes relevant information of PScell addition or change.

Optionally, in an embodiment of the present disclosure, sending the indication information to the network-side device includes: sending the indication information via a connection establishment completion message, a connection recovery completion message, or a connection reestablishment completion message.

Optionally, in an embodiment of the present disclosure, the method further includes: receiving a response message sent by the network-side device, in which the response message has a request indication; and sending the successful PScell addition or change report to the network-side device according to the request indication.

Optionally, in an embodiment of the present disclosure, after sending the successful PScell addition or change report to the network-side device, the method further includes: releasing the successful PScell addition or change report.

Optionally, in an embodiment of the present disclosure, the response message includes a UEInformationRequest message.

Optionally, in an embodiment of the present disclosure, the method further includes: obtaining a time for recording relevant information of PScell addition or change into the successful PScell addition or change report; and releasing the successful PScell addition or change report after the event exceeds a preset time.

Optionally, in an embodiment of the present disclosure, the method further includes: sending capability information of the terminal device to the network-side device. The capability information is used to indicate whether the terminal device supports the successful PScell addition or change report or not.

In another aspect, an embodiment of the present disclosure provides a method for reporting a successful PScell addition or change report, which is performed by a network-side device, and includes: receiving indication information sent by a terminal device, in which the indication information is used to indicate that the terminal device has the successful PScell addition or change report; and obtaining the successful PScell addition or change report.

Optionally, in an embodiment of the present disclosure, the method further includes: sending a response message to the terminal device, in which the response message has a request indication; and receiving the successful PScell addition or change report sent by the terminal device.

Optionally, in an embodiment of the present disclosure, the response message includes a UEInformationRequest message.

Optionally, in an embodiment of the present disclosure, the method further includes: receiving capability information of the terminal device sent by the terminal device, in which the capability information is used to indicate whether the terminal device supports the successful PScell addition or change report or not; and determining, based on the capability information, whether the terminal device may be configured to report the successful PScell addition or change report or not.

Optionally, in an embodiment of the present disclosure, receiving the indication information sent by the terminal device includes: receiving the indication information via a UEAssistanceInformation message.

Optionally, in an embodiment of the present disclosure, receiving the indication information sent by the terminal device includes: receiving the indication information via an MAC CE message.

Optionally, in an embodiment of the present disclosure, a priority of the MAC CE message is lower than a priority of a buffer status report (BSR) MAC CE message.

Optionally, in an embodiment of the present disclosure, receiving the indication information sent by the terminal device includes: receiving the indication information via a measurement report.

Optionally, in an embodiment of the present disclosure, receiving the indication information sent by the terminal device includes: receiving the indication information via a connection establishment completion message, a connection recovery completion message, or a connection reestablishment completion message.

In a yet another aspect, an embodiment of the present disclosure provides an apparatus for reporting a successful PScell addition or change report, which includes: a sending module configured to send indication information to a network-side device after a reporting trigger condition is met. The indication information is used to indicate that a terminal device has the successful PScell addition or change report.

In a yet another aspect, an embodiment of the present disclosure provides an apparatus for reporting a successful PScell addition or change report, which includes: a receiving module configured to receive indication information sent by a terminal device. The indication information is used to instruct a network-side device to obtain the successful PScell addition or change report.

In a yet another aspect, an embodiment of the present disclosure provides a communication device, which includes: a processor, and a memory having stored therein a computer program. The processor is configured to execute the computer program stored in the memory to cause the device to perform the method provided in an embodiment of the one aspect.

In a yet another aspect, an embodiment of the present disclosure provides a communication device, which includes: a processor, and a memory having stored therein a computer program. The processor is configured to execute the computer program stored in the memory to cause the device to perform the method provided in an embodiment of the other aspect.

In a yet another aspect, an embodiment of the present disclosure provides a communication device, which includes: a processor, and an interface circuit. The interface circuit is configured to receive code instructions and transmit them to the processor, and the processor is configured to run the code instructions to perform the method provided in an embodiment of the one aspect.

In a yet another aspect, an embodiment of the present disclosure provides a communication device, which includes: a processor, and an interface circuit. The interface circuit is configured to receive code instructions and transmit them to the processor, and the processor is configured to run the code instructions to perform the method provided in an embodiment of the other aspect.

In a yet another aspect, an embodiment of the present disclosure provides a computer-readable storage medium, which is configured to store instructions that, when executed, cause the method provided in an embodiment of the one aspect to be implemented.

In a yet another aspect, an embodiment of the present disclosure provides a computer-readable storage medium, which is configured to store instructions that, when executed, cause the method provided in an embodiment of the other aspect to be implemented.

In conclusion, in the embodiments of the present disclosure, the terminal device may send the indication information to the network-side device after the reporting trigger condition is met. The indication information is used to indicate that the terminal device has the successful PScell addition or change report. In the embodiments of the present disclosure, the terminal device sends the indication information to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

### BRIEF DESCRIPTION OF THE DRAWINGS

The above and/or additional aspects and advantages of the present disclosure will become apparent and more readily appreciated from the following descriptions made with reference to the accompanying drawings, in which:
FIG. 1 is a schematic flowchart of a method for reporting a successful PScell addition or change report provided in an embodiment of the present disclosure;
FIG. 2 is a schematic flowchart of a method for reporting a successful PScell addition or change report provided in another embodiment of the present disclosure;
FIG. 3 is a schematic flowchart of a method for reporting a successful PScell addition or change report provided in yet another embodiment of the present disclosure;
FIG. 4 is a schematic flowchart of a method for reporting a successful PScell addition or change report provided in a further embodiment of the present disclosure;
FIG. 5 is a schematic flowchart of a method for reporting a successful PScell addition or change report provided in a further embodiment of the present disclosure;
FIG. 6 is a schematic flowchart of a method for reporting a successful PScell addition or change report provided in a further embodiment of the present disclosure;
FIG. 7 is a schematic flowchart of a method for reporting a successful PScell addition or change report provided in a further embodiment of the present disclosure;
FIG. 8 is a schematic flowchart of a method for reporting a successful PScell addition or change report provided in a further embodiment of the present disclosure;
FIG. 9 is a schematic flowchart of a method for reporting a successful PScell addition or change report provided in a further embodiment of the present disclosure;
FIG. 10 is a schematic block diagram of an apparatus for reporting a successful PScell addition or change report provided in an embodiment of the present disclosure;
FIG. 11 is a schematic block diagram of an apparatus for reporting a successful PScell addition or change report provided in another embodiment of the present disclosure;
FIG. 12 is a block diagram of a user equipment provided in an embodiment of the present disclosure; and
FIG. 13 is a block diagram of a network-side device provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present disclosure. Instead, they are merely examples of devices and methods consistent with some aspects of embodiments of the present disclosure as recited in the appended claims.

Terms used herein in embodiments of the present disclosure are only for the purpose of describing specific embodiments, but should not be construed to limit embodiments of the present disclosure. As used in embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

A method, apparatus, and device for reporting a successful PScell addition or change report, and a storage medium provided by embodiments of the present disclosure will be introduced in detail below with reference to the accompanying drawings.

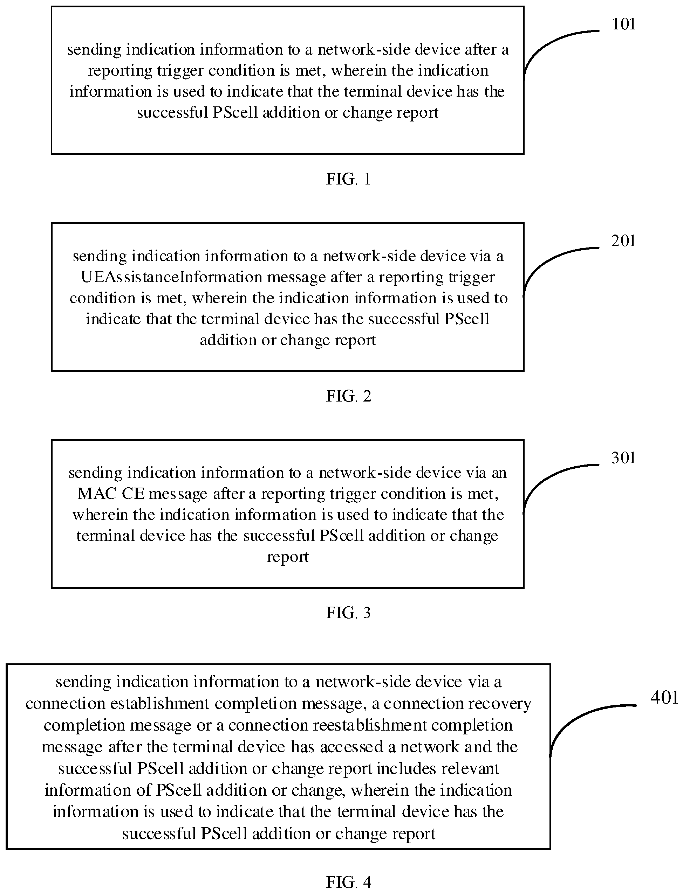

FIG. 1 is a schematic flowchart of a method for reporting a successful PScell addition or change report provided in an embodiment of the present disclosure. The method is performed by a terminal device. As shown in FIG. 1, the method may include the following step.

In step 101, indication information is sent to a network-side device after a reporting trigger condition is met, in which the indication information may be used to indicate that the terminal device has the successful PScell addition or change report.

It should be noted that, in an embodiment of the present disclosure, the terminal device may refer to a device that provides voice and/or data connectivity to a user. The terminal device may communicate with one or more core networks via a radio access network (RAN). The terminal device may be an Internet of Things terminal, such as a sensor device, a mobile phone (or referred to as a "cellular" phone), and a computer with an Internet of Things terminal. For example, it may be a fixed, portable, pocket-sized, handheld, built-in computer or vehicle-mounted apparatus. For example, it may be a station (STA), a subscriber unit, a subscriber station, a mobile station, a mobile, a remote station, an access point, a remote terminal, an access terminal, a user terminal or a user agent. Alternatively, the terminal device may also be a device of an unmanned aerial vehicle. Alternatively, the terminal device may also be a vehicle-mounted device, for example, a driving computer with a wireless communication function, or a wireless terminal externally connected with a driving computer. Alternatively, the terminal device may also be a roadside device, for example, a street lamp, a signal lamp or other roadside devices with a wireless communication function.

In an embodiment of the present disclosure, the reporting trigger condition may be that the terminal device records relevant information of PScell addition or change into the successful PScell addition or change report.

Further, in an embodiment of the present disclosure, the terminal device may initiate the PScell addition or change after the reporting trigger condition is met. The PScell addition or change may include one or more of: conditional PScell addition (CPA); conditional PScell change (CPC); conditional PScell addition/change (CPAC). Further, the network-side device may directly configure the PScell addition or change other than the CPAC.

Further, in an embodiment of the present disclosure, the terminal device may record relevant information having the successful PScell addition or change report into VarSuccessPAC-Report. In an embodiment of the present disclosure, the successful PScell addition or change report may be successPAC-Report, and the successful PScell addition or change may be successPAC.

Further, in an embodiment of the present disclosure, the reporting trigger condition may also be that the terminal device accesses a network, and the successful PScell addition or change report includes the relevant information of the PScell addition or change.

Further, in an embodiment of the present disclosure, many methods for sending the indication information to the network-side device may be provided, and specific methods will be described in detail in subsequent embodiments.

Further, in an embodiment of the present disclosure, the terminal device may obtain a time for recording relevant information of PScell addition or change into the successful PScell addition or change report; and releasing the successful PScell addition or change report after the event exceeds a preset time.

For example, in an embodiment of the present disclosure, the preset time may be 48 hours. After the terminal device adds relevant information of the successPAC to the VarSuccessPAC-Report for the last time, and 48 hours have passed, the terminal device may release the successful PScell addition or change report. Further, in other embodiments of the present disclosure, the preset time may be configured by the network-side device or agreed upon by a system. That is, the successful PScell addition or change report may be released according to other preset times.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the terminal device sends the indication information to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

It should be noted that, the method for reporting the successful PScell addition or change report provided in the following embodiments may distinguish a network new ration (NR) from an evolved UMTS (universal mobile telecommunications system) terrestrial radio access network (EUTRA), and may report the successful PScell addition or change report in the NR network and the EUTRA network individually.

FIG. 2 is a schematic flowchart of a method for reporting a successful PScell addition or change report provided in an embodiment of the present disclosure. The method is performed by a terminal device. As shown in FIG. 2, the method may include the following step.

In step 201, indication information is sent to a network-side device via a UEAssistanceInformation message after a reporting trigger condition is met, in which the indication information is used to indicate that the terminal device has the successful PScell addition or change report.

In an embodiment of the present disclosure, the reporting trigger condition may be met after the terminal device records relevant information of successPAC into VarSuccessPAC-Report for each time (including a first time). Further, a first recording of the relevant information of the successPAC into the VarSuccessPAC-Report may be that the terminal device records the relevant information of the successPAC into the VarSuccessPAC-Report again after releasing the VarSuccessPAC-Report.

Further, in an embodiment of the present disclosure, after the terminal device reports the PScell addition or change report for the first time, after sending the indication information to the network-side device via the UEAssistanceInformation message, a prohibition timer may be started. The terminal device no longer sends the indication information after the prohibition timer reaches a preset threshold. Further, the preset threshold of the prohibition timer may be a threshold agreed upon by a system or a threshold configured for the network-side device. In addition, when the prohibition timer is no longer running, the terminal device may send the indication information to the network-side device again via the UEAssistanceInformation message after the reporting trigger condition is met.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the terminal device sends the indication information via different sending methods to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

FIG. 3 is a schematic flowchart of a method for reporting a successful PScell addition or change report provided in an embodiment of the present disclosure. The method is performed by a terminal device. As shown in FIG. 3, the method may include the following step.

In step 301, indication information is sent to a network-side device via a medium access control-control element (MAC CE) message after a reporting trigger condition is met, in which the indication information is used to indicate that the terminal device has the successful PScell addition or change report.

It should be noted that, in an embodiment of the present disclosure, a ratio resource control (RRC) may instruct an MAC to send the MAC CE message. Further, when no available uplink resource is provided, an MAC CE may choose to trigger a status report (SR) or not allow to trigger an SR.

In an embodiment of the present disclosure, the reporting trigger condition may be met after the terminal device records relevant information of successPAC into VarSuccessPAC-Report for each time (including a first time).

Further, in an embodiment of the present disclosure, a priority of the MAC CE message is lower than a priority of a buffer status report (BSR) MAC CE message.

For example, in an embodiment of the present disclosure, after the terminal device reports the PScell addition or change report for the first time, if the terminal device sends the MAC CE message, all triggered MAC CE messages are canceled.

For other detailed descriptions of the step 301, reference may be made to the above embodiment descriptions, which will not be described in detail herein in embodiments of the present disclosure.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the terminal device sends the indication information via different sending methods to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

FIG. 4 is a schematic flowchart of a method for reporting a successful PScell addition or change report provided in an embodiment of the present disclosure. The method is performed by a terminal device. As shown in FIG. 4, the method may include the following step.

In step 401, indication information is sent to a network-side device via a connection establishment completion message, a connection recovery completion message or a connection reestablishment completion message after the terminal device has accessed a network and the successful PScell addition or change report includes relevant information of PScell addition or change, in which the indication information is used to indicate that the terminal device has the successful PScell addition or change report.

In an embodiment of the present disclosure, the reporting trigger condition may be met after the terminal device records relevant information of successPAC into VarSuccessPAC-Report for each time (including a first time).

Further, in an embodiment of the present disclosure, during a subsequent process that the terminal device accesses the network, if the VarsuccessPAC-Report records the relevant information of the successPAC, the terminal device carries available indication information of the successPAC-Report in the connection establishment completion message, the connection recovery completion message, or the connection reestablishment completion message.

For other detailed descriptions of the step 401, reference may be made to the above embodiment descriptions, which will not be described in detail herein in embodiments of the present disclosure.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the terminal device sends the indication information via different sending methods to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

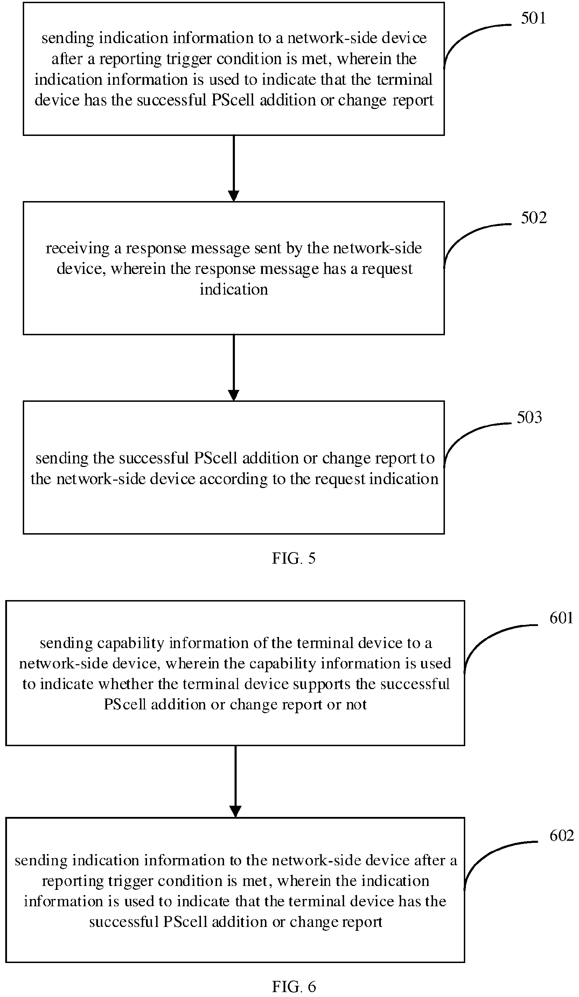

FIG. 5 is a schematic flowchart of a method for reporting a successful PScell addition or change report provided in an embodiment of the present disclosure. The method is performed by a terminal device. As shown in FIG. 5, the method may include the following steps.

In step 501, indication information is sent to a network-side device after a reporting trigger condition is met, in which the indication information is used to indicate that the terminal device has the successful PScell addition or change report.

In step 502, a response message sent by the network-side device is received, in which the response message has a request indication.

In an embodiment of the present disclosure, the response message includes a UEInformationRequest message.

Further, in an embodiment of the present disclosure, the request indication may distinguish connected networks, such as an NR and an EUTRA.

For example, in an embodiment of the present disclosure, after the network device receives successPAC-Report indicated by the terminal device, the terminal device may request to obtain the successful PScell addition or change report via a request indication successPAC-ReportReq contained in the UEInformationRequest message sent by the network-side device.

In step 503, the successful PScell addition or change report is sent to the network-side device according to the request indication.

In an embodiment of the present disclosure, after sending the successful PScell addition or change report to the network-side device, the successful PScell addition or change report may be released.

For other detailed descriptions of the steps 501 to 503, reference may be made to the above embodiment descriptions, which will not be described in detail herein in embodiments of the present disclosure.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the terminal device sends the indication information to inform the network-side device that the successful PScell addition or change report is reported. Further, the terminal device may not only report this report but also release this report. The present disclosure provides a solution for the situation where "a report recording that the PScell is successfully added or changed is not supported for now" to provide an additional confirmation opportunity and improve a success rate of the PScell addition or change.

FIG. 6 is a schematic flowchart of a method for reporting a successful PScell addition or change report provided in an embodiment of the present disclosure. The method is performed by a terminal device. As shown in FIG. 6, the method may include the following steps.

In step 601, capability information of the terminal device is sent to a network-side device, in which the capability information is used to indicate whether the terminal device supports the successful PScell addition or change report or not.

In step 602, indication information is sent to the network-side device after a reporting trigger condition is met, in which the indication information is used to indicate that the terminal device has the successful PScell addition or change report.

For other detailed descriptions of the steps 601 to 602, reference may be made to the above embodiment descriptions, which will not be described in detail herein in embodiments of the present disclosure.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the network-side device may first be informed whether the terminal device supports the successful PScell addition or change report or not via the capability information. When the terminal device does not support the successful PScell addition or change report, no reporting may be performed so as to save resources. Further, when the terminal device supports the successful PScell addition or change report, the terminal device sends the indication information to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

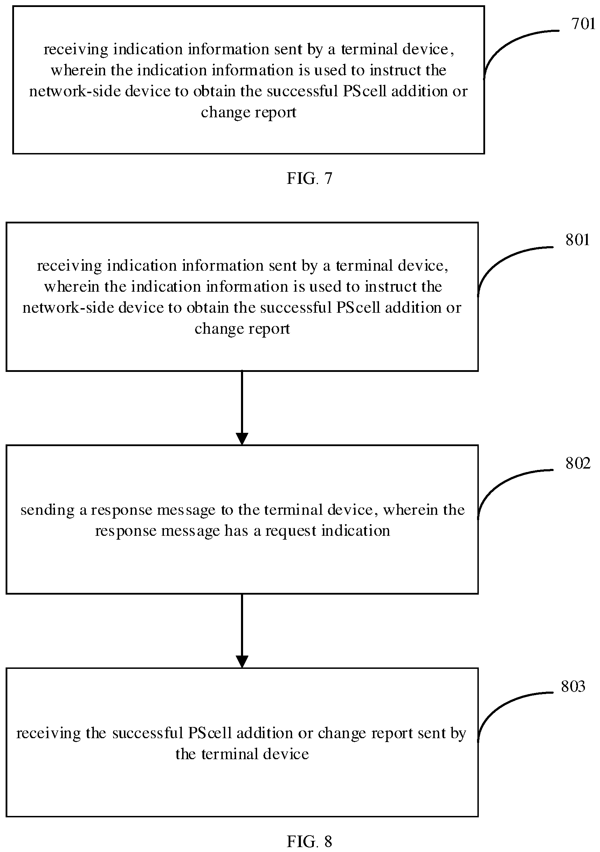

FIG. 7 is a schematic flowchart of a method for reporting a successful PScell addition or change report provided in an embodiment of the present disclosure. The method is performed by a network-side device. As shown in FIG. 7, the method may include the following step.

In step 701, indication information sent by a terminal device is received, in which the indication information is used to instruct the network-side device to obtain the successful PScell addition or change report.

In an embodiment of the present disclosure, the network-side device may receive the indication information via a UEAssistanceInformation message.

Further, in an embodiment of the present disclosure, the network-side device may receive the indication information via an MAC CE message, and a priority of the MAC CE message is lower than a priority of a buffer status report BSR MAC CE message.

Further, in an embodiment of the present disclosure, the network-side device may receive the indication information via a measurement report.

Further, in an embodiment of the present disclosure, the network-side device may receive the indication information via a connection establishment completion message, a connection recovery completion message, or a connection reestablishment completion message.

For other detailed descriptions of the step 701, reference may be made to the above embodiment descriptions, which will not be described in detail herein in embodiments of the present disclosure.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the terminal device sends the indication information to inform the network-side device to report the successful PScell addition or change report. The present disclosure provides a solution for the situation where "a report recording that the PScell is successfully added or changed is not supported for now" to provide an additional confirmation opportunity and improve a success rate of the PScell addition or change.

FIG. 8 is a schematic flowchart of a method for reporting a successful PScell addition or change report provided in an embodiment of the present disclosure. The method is performed by a network-side device. As shown in FIG. 8, the method may include the following steps.

In step 801, indication information sent by a terminal device is received, in which the indication information is used to instruct the network-side device to obtain the successful PScell addition or change report.

In step 802, a response message is sent to the terminal device, in which the response message has a request indication.

In step 803, the successful PScell addition or change report sent by the terminal device is received.

For other detailed descriptions of the steps 801 to 803, reference may be made to the above embodiment descriptions, which will not be described in detail herein in embodiments of the present disclosure.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the terminal device sends the indication information to inform the network-side device that the successful PScell addition or change report is reported. Further, the terminal device may not only report this report but also release this report. The present disclosure provides a solution for the situation where "a report recording that the PScell is successfully added or changed is not supported for now" to provide an additional confirmation opportunity and improve a success rate of the PScell addition or change.

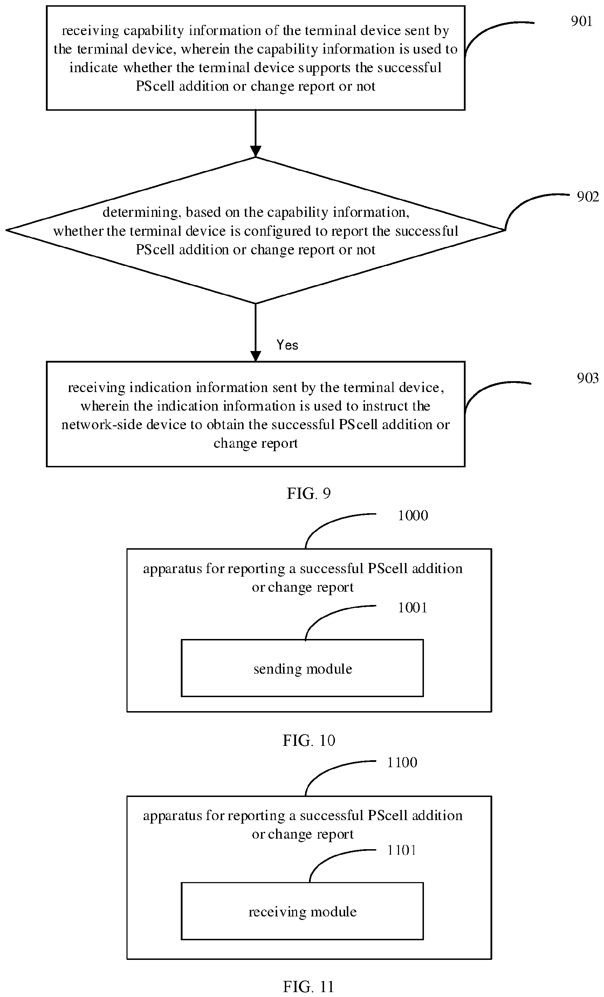

FIG. 9 is a schematic flowchart of a method for reporting a successful PScell addition or change report provided in an embodiment of the present disclosure. The method is performed by a network-side device. As shown in FIG. 9, the method may include the following steps.

In step 901, capability information of the terminal device sent by the terminal device is received, in which the capability information is used to indicate whether the terminal device supports the successful PScell addition or change report or not.

In step 902, it is determined based on the capability information whether the terminal device is configured to report the successful PScell addition or change report or not.

In step 903, indication information sent by the terminal device is received, in which the indication information is used to instruct the network-side device to obtain the successful PScell addition or change report.

For other detailed descriptions of the steps 901 to 903, reference may be made to the above embodiment descriptions, which will not be described in detail herein in embodiments of the present disclosure.

In conclusion, in the method for reporting the PScell addition or change report provided in the embodiments of the present disclosure, the terminal device may send the indication information to the network-side device after the reporting trigger condition is met. The indication information is used to indicate that the terminal device has the successful PScell addition or change report. In the embodiments of the present disclosure, the network-side device may first be informed whether the terminal device supports the successful PScell addition or change report or not via the capability information. When the terminal device does not support the successful PScell addition or change report, no reporting may be performed, so as to save resources. Further, when the terminal device supports the successful PScell addition or change report, the terminal device sends the indication information to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

FIG. 10 is a schematic block diagram of an apparatus for reporting a successful PScell addition or change report provided in an embodiment of the present disclosure. As shown in FIG. 10, the apparatus may include: a sending module configured to send indication information to a network-side device after a reporting trigger condition is met, in which the indication information is used to indicate that a terminal device has the successful PScell addition or change report.

In conclusion, in the apparatus for reporting the PScell addition or change report provided in the embodiments of the present disclosure, the terminal device may send the indication information to the network-side device after a reporting trigger condition is met. The indication information is used to indicate that the terminal device has the successful PScell addition or change report. In the embodiments of the present disclosure, the terminal device sends the indication information to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

Optionally, in an embodiment of the present disclosure, the reporting trigger condition is that the terminal device records relevant information of PScell addition or change into the successful PScell addition or change report.

Optionally, in an embodiment of the present disclosure, the sending module is further configured to: send the indication information via a UEAssistanceInformation message.

Optionally, in an embodiment of the present disclosure, the sending module is further configured to: send the indication information via a media access control control element (MAC CE) message.

Optionally, in an embodiment of the present disclosure, a priority of the MAC CE message is lower than a priority of a buffer status report BSR MAC CE message.

Optionally, in an embodiment of the present disclosure, the sending module is further configured to: send the indication information via a measurement report.

Optionally, in an embodiment of the present disclosure, the apparatus is further configured to: start a prohibition timer. The terminal device no longer sends the indication information after the prohibition timer reaches a preset threshold.

Optionally, in an embodiment of the present disclosure, the reporting trigger condition is that the terminal device accesses a network, and the successful PScell addition or change report includes relevant information of PScell addition or change.

Optionally, in an embodiment of the present disclosure, the sending module is further configured to: send the indication information via a connection establishment completion message, a connection recovery completion message, or a connection reestablishment completion message.

Optionally, in an embodiment of the present disclosure, the apparatus is further configured to: receive a response message sent by the network-side device, in which the response message has a request indication; and send the successful PScell addition or change report to the network-side device according to the request indication.

Optionally, in an embodiment of the present disclosure, the apparatus is further configured to: release the successful PScell addition or change report.

Optionally, in an embodiment of the present disclosure, the response message includes a UEInformationRequest message.

Optionally, in an embodiment of the present disclosure, the apparatus is further configured to: obtain a time for recording relevant information of PScell addition or change into the successful PScell addition or change report; and release the successful PScell addition or change report after the event exceeds a preset time.

Optionally, in an embodiment of the present disclosure, the apparatus is further configured to: send capability information of the terminal device to the network-side device. The capability information is used to indicate whether the terminal device supports the successful PScell addition or change report or not.

FIG. 11 is a schematic block diagram of an apparatus for reporting a PScell addition or change report provided in an embodiment of the present disclosure. As shown in FIG. 11, the apparatus may include: a receiving module configured to receive indication information sent by a terminal device, in which the indication information is used to instruct a network-side device to obtain the successful PScell addition or change report.

In conclusion, in the apparatus for reporting the PScell addition or change report provided in the embodiments of the present disclosure, the terminal device may send the indication information to the network-side device after a reporting trigger condition is met. The indication information is used to indicate that the terminal device has the successful PScell addition or change report. In the embodiments of the present disclosure, the terminal device sends the indication information to inform the network-side device that the successful PScell addition or change report is reported. The present disclosure provides a solution for the situation where "a report recording that the PScell is successfully added or changed is not supported for now" to provide an additional confirmation opportunity and improve a success rate of the PScell addition or change.

Optionally, in an embodiment of the present disclosure, the apparatus is further configured to: send a response message to the terminal device, in which the response message has a request indication; and receive the successful PScell addition or change report sent by the terminal device.

Optionally, in an embodiment of the present disclosure, the response message includes a UEInformationRequest message.

Optionally, in an embodiment of the present disclosure, the apparatus is further configured to: receive capability information of the terminal device sent by the terminal device, in which the capability information is used to indicate whether the terminal device supports the successful PScell addition or change report or not; and determine, based on the capability information, whether the terminal device may be configured to report the successful PScell addition or change report or not.

Optionally, in an embodiment of the present disclosure, the receiving module is further configured to: receive the indication information via a UEAssistanceInformation message.

Optionally, in an embodiment of the present disclosure, the receiving module is further configured to: receive the indication information via an MAC CE message.

Optionally, in an embodiment of the present disclosure, a priority of the MAC CE message is lower than a priority of a BSR MAC CE message.

Optionally, in an embodiment of the present disclosure, the receiving module is further configured to: receive the indication information via a measurement report.

Optionally, in an embodiment of the present disclosure, the receiving module is further configured to: receive the indication information via a connection establishment completion message, a connection recovery completion message, or a connection reestablishment completion message.

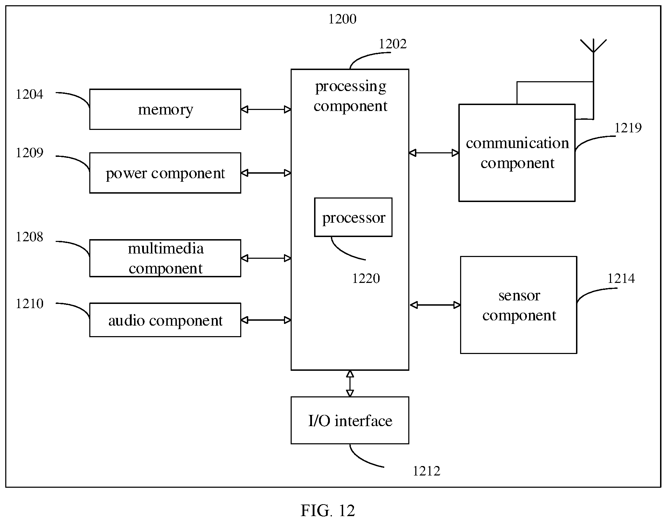

FIG. 12 is a block diagram of a user equipment (UE) 1200 provided in an embodiment of the present disclosure. For example, the UE 1200 may be a mobile phone, a computer, a digital broadcast terminal device, a messaging device, a game console, a tablet device, a medical device, a fitness device, a personal digital assistant, or the like.

Referring to FIG. 12, the UE 1200 may include at least one of the following components: a processing component 1202, a memory 1204, a power component 1206, a multimedia component 1208, an audio component 1210, an input/output (I/O) interface 1212, a sensor component 1213, and a communication component 1216.

The processing component 1202 typically controls overall operations of the UE 1200, such as the operations associated with display, phone calls, data communications, camera operations, and recording operations. The processing component 1202 may include at least one processors 1220 to execute instructions to perform all or some of the steps in the above-described methods. Moreover, the processing component 1202 may include at least one modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the UE 1200. Examples of such data include instructions for any applications or methods operated on the UE 1200, contact data, phonebook data, messages, pictures, videos, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the UE 1200. The power component 1206 may include a power management system, at least one power sources, and any other components associated with the generation, management, and distribution of power in the UE 1200.

The multimedia component 1208 includes a screen providing an output interface between the UE 1200 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensors to sense touches, swipes, and gestures on the touch panel. The touch sensors may not only sense a boundary of a touch or swipe action, but also sense a wake-up time and a pressure associated with the touch or swipe action. In some embodiments, the multimedia component 1208 includes a front camera and/or a rear camera. The front camera and/or the rear camera may receive an external multimedia datum while the UE 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the UE 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as keyboards, click wheels, buttons, and the like. The buttons may include, but are not limited to, a home button, a volume button, a starting button, and a locking button.

The sensor component 1213 includes at least one sensors to provide status assessments of various aspects of the UE 1200. For instance, the sensor component 1213 may detect an open/closed status of the device 1200, relative positioning of components, e.g., the display and the keypad, of the UE 1200. The sensor component 1213 may also detect a change in position of the UE 1200 or a component of the UE 1200, a presence or absence of user contact with the UE 1200, an orientation or an acceleration/deceleration of the UE 1200, and a change in temperature of the UE 1200. The sensor component 1213 may include a proximity sensor configured to detect the presence of nearby objects without any physical contact. The sensor component 1213 may further include a light sensor, such as a CMOS or CCD image sensor, for use in imaging applications. In some embodiments, the sensor component 1213 may further include an accelerometer sensor, a gyroscope sensor, a magnetic sensor, a pressure sensor, or a temperature sensor.

The communication component 1216 is configured to facilitate communication, wired or wireless, between the UE 1200 and other devices. The UE 1200 can access a wireless network based on a communication standard, such as Wi-Fi, 2G, or 3G, or a combination thereof. In an illustrative embodiment, the communication component 1216 receives a broadcast signal or broadcast associated information from an external broadcast management system via a broadcast channel. In an illustrative embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1200 may be implemented with at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

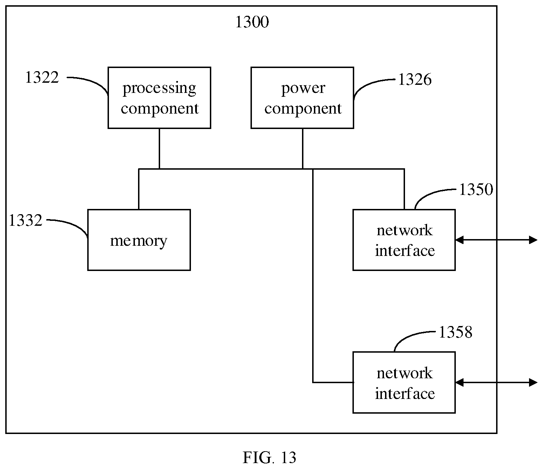

FIG. 13 is a block diagram of a network-side device 1300 provided in an embodiment of the present disclosure. For example, the network-side device 1300 may be provided as one network-side device. Referring to FIG. 13, the network-side device 1300 includes a processing component 1311, which further includes at least one of processors, and a memory resource represented by a memory 1332 configured to store instructions executable by the processing component 1322, such as application programs. The application programs stored in the memory 1332 may include one or more modules each corresponding to a set of instructions. In addition, the processing component 1310 is configured to execute instructions to perform any of the foregoing methods performed by the network-side device, for example, the method shown in FIG. 1.

The network-side device 1300 may also include a power component 1326 configured to perform the power management of the network-side device 1300, a wired or wireless network interfaces 1350 configured to connect the network-side device 1300 to a network, and an input-output (I/O) interface 1358. The network-side device 1300 may operate based on an operating system stored in the memory 1332, such as Windows Server TM, Mac OS XTM, Unix TM, Linux TM, Free BSDTM, or the like.

In the above embodiments provided by the present disclosure, the methods provided in embodiments of the present disclosure are introduced from perspectives of the network-side device and the UE respectively. In order to implement the various functions in the methods provided by the above embodiments of the present disclosure, the network-side device and the UE may include a hardware structure and a software module, and implement the above functions in a form of the hardware structure, the software module, or the hardware structure plus the software module. A certain function among the above mentioned functions may be implemented in the form of the hardware structure, the software module, or the hardware structure plus the software module.

In the above embodiments provided by the present disclosure, the methods provided in embodiments of the present disclosure are introduced from perspectives of the network-side device and the UE respectively. In order to implement the various functions in the methods provided by the above embodiments of the present disclosure, the network-side device and the UE may include a hardware structure and a software module, and implement the above functions in a form of the hardware structure, the software module, or the hardware structure plus the software module. A certain function among the above mentioned functions may be implemented in the form of the hardware structure, the software module, or the hardware structure plus the software module.

Embodiments of the present disclosure provide a communication device, which may include a transceiving module and a processing module. The transceiving module may include a sending module and/or a receiving module, the sending module is configured to implement a sending function, and the receiving module is configured to implement a receiving function. The transceiving module may implement the sending function and/or the receiving function.

The communication device may be a terminal device (such as the terminal device in the foregoing method embodiments), may also be a device in the terminal device, and may also be a device that can be used in conjunction with the terminal device. Alternatively, the communication device may be a network device, may also be a device in the network device, and may also be a device that can be used in conjunction with the network device.

Embodiments of the present disclosure provide a communication device, which may be a network device, may also be a terminal device (such as the terminal device in the foregoing method embodiments), may also be a chip, a chip system, or a processor that supports the network device to implement the above methods, and may also be a chip, a chip system, or a processor that supports the terminal device to implement the above methods. The device may be configured to implement the methods as described in the above method embodiments, and for details, reference may be made to the descriptions in the above method embodiments.

The communications device may include one or more processors. The processor may be a general-purpose processor or a special-purpose processor. For example, it may be a baseband processor or a central processing unit. The baseband processor may be configured to process a communication protocol and communication data, and the central processing unit may be configured to control a communication device (such as a network-side device, a baseband chip, a terminal device, a terminal device chip, a DU or a CU, etc.), execute computer programs, and process data of the computer programs.

Optionally, the communication device may further include one or more memories having stored therein a computer program. The processor executes the computer program, to cause the communication device to implement the methods as described in the above method embodiments. Optionally, the memory may have stored therein data. The communication device and the memory may be provided separately or integrated together.

Optionally, the communication device may further include a transceiver and an antenna. The transceiver may be called a transceiving element, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device may further include one or more interface circuits. The interface circuit is configured to receive a code instruction and transmit the code instruction to the processor. The processor runs the code instruction to enable the communication device to execute the methods as described in the above method embodiments.

The communication device is a terminal device (such as the terminal device in the foregoing method embodiments). The processor is configured to execute the method shown in any one of FIGs. 1 to 6.

In an implementation, the processor may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor may have stored therein a computer program that, when run on the processor, causes the communication device to implement the methods as described in the above method embodiments. The computer program may be embedded in the processor, and in this case, the processor may be implemented by a hardware.

In an implementation, the communication device may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an N-type metal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the terminal device in the foregoing method embodiments), but the scope of the communication device described in the present disclosure is not limited thereto, and the structure of the communication device may not be limited thereto. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, the chip includes a processor and an interface. In the chip, one or more processors may be provided, and more than one interface may be provided.

Optionally, the chip further includes a memory for storing necessary computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such an implementation should not be understood as extending beyond the protection scope of embodiments of the present disclosure.

The present disclosure also provides a readable storage medium having stored thereon instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer program is loaded and executed on the computer, all or some of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present disclosure are distinguished only for convenience of description, and are not intended to limit the scope of embodiments of the present disclosure, and nor are they intended to represent sequential order.

The term "at least one" used in the present disclosure may also be described as one or more, and the term "a plurality of" may cover two, three, four or more, which are not limited in the present disclosure. In embodiments of the present disclosure, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for reporting a successful primary secondary cell (PScell) addition or change report, performed by a terminal device, comprising:
sending indication information to a network-side device after a reporting trigger condition is met, wherein the indication information is used to indicate that the terminal device has the successful PScell addition or change report.

2. The method according to claim 1, wherein the reporting trigger condition is that the terminal device records relevant information of PScell addition or change into the successful PScell addition or change report.

3. The method according to claim 2, wherein sending the indication information to the network-side device comprises:
sending the indication information via a measurement report.

4. The method according to claim 1, wherein after sending the indication information to the network-side device, the method further comprises:
starting a prohibition timer, wherein the terminal device no longer sends the indication information after the prohibition timer reaches a preset threshold.

5. The method according to claim 1, wherein the reporting trigger condition is that the terminal device accesses a network, and the successful PScell addition or change report comprises relevant information of PScell addition or change.

6. The method according to claim 5, wherein sending the indication information to the network-side device comprises:
sending the indication information via a connection establishment completion message, a connection recovery completion message, or a connection reestablishment completion message.

7. The method according to claim 1, further comprising:
receiving a response message sent by the network-side device, wherein the response message has a request indication; and
sending the successful PScell addition or change report to the network-side device according to the request indication.

8. The method according to claim 7, wherein after sending the successful PScell addition or change report to the network-side device, the method further comprises:
releasing the successful PScell addition or change report.

9. The method according to claim 1, further comprising:
obtaining a time for recording relevant information of PScell addition or change into the successful PScell addition or change report; and
releasing the successful PScell addition or change report after the event exceeds a preset time.

10. The method according to claim 1, further comprising:
sending capability information of the terminal device to the network-side device, wherein the capability information is used to indicate whether the terminal device supports the successful PScell addition or change report or not.

11. A method for reporting a successful PScell addition or change report, performed by a network-side device, comprising:
receiving indication information sent by a terminal device, wherein the indication information is used to instruct the network-side device to obtain the successful PScell addition or change report.

12. The method according to claim 11, further comprising:
sending a response message to the terminal device, wherein the response message has a request indication; and
receiving the successful PScell addition or change report sent by the terminal device.

13. The method according to claim 11, further comprising:
receiving capability information of the terminal device sent by the terminal device, wherein the capability information is used to indicate whether the terminal device supports the successful PScell addition or change report or not; and
determining, based on the capability information, whether the terminal device is configured to report the successful PScell addition or change report or not.

14. The method according to claim 11, wherein receiving the indication information sent by the terminal device comprises:
receiving the indication information via a measurement report.

15. The method according to claim 11, wherein receiving the indication information sent by the terminal device comprises:
receiving the indication information via a connection establishment completion message, a connection recovery completion message, or a connection reestablishment completion message.

16. An apparatus for reporting a successful PScell addition or change report, comprising:
a sending module configured to send indication information to a network-side device after a reporting trigger condition is met, wherein the indication information is used to indicate that a terminal device has the successful PScell addition or change report.

17. An apparatus for reporting a successful PScell addition or change report, comprising:
a receiving module configured to receive indication information sent by a terminal device, wherein the indication information is used to instruct a network-side device to obtain the successful PScell addition or change report.

18. A communication device, comprising
a processor, and
a memory having stored therein a computer program,
wherein the processor is configured to execute the computer program stored in the memory to cause the device to perform the method according to any one of claims 1 to 10.

19. A communication device, comprising
a processor, and
a memory having stored therein a computer program,
wherein the processor is configured to execute the computer program stored in the memory to cause the device to perform the method according to any one of claims 11 to 15.

20. A communication device, comprising:
a processor, and
an interface circuit,
wherein the interface circuit is configured to receive code instructions and transmit them to the processor, and
the processor is configured to run the code instructions to perform the method according to any one of claims 1 to 10.

21. A communication device, comprising:
a processor, and
an interface circuit,
wherein the interface circuit is configured to receive code instructions and transmit them to the processor, and
the processor is configured to run the code instructions to perform the method according to any one of claims 11 to 15.

22. A computer-readable storage medium, configured to store instructions that, when executed, cause the method according to any one of claims 1 to 10 to be implemented.

23. A computer-readable storage medium, configured to store instructions that, when executed, cause the method according to any one of claims 11 to 15 to be implemented.
